# EUROPEAN PATENT SPECIFICATION

(11) **EP 2 562 490 B1**
(45) Date of publication and mention of the grant of the patent: **13.12.2017**
(21) Application number: 11771706.6
(22) Date of filing: 17.03.2011
(51) Int. Cl.: F25B 43/00, F25B 1/00

(54) **REFRIGERATOR**
KÜHLSCHRANK
RÉFRIGÉRATEUR

(30) Priority: 22.04.2010 JP 2010098516
(43) Date of publication of application: 27.02.2013
(73) Proprietor: Panasonic Corporation, Kadoma-shi Osaka 571-8501 (JP)
(72) Inventor: SATO, Shigehiro, Chuo-ku Osaka 540-6207 (JP)
(74) Representative: Eisenführ Speiser
(86) International application number: PCT/JP2011/001566
(87) International publication number: WO 2011/132362

(56) References cited:
- EP-A2- 1 975 527
- WO-A1-01/94864
- WO-A1-2009/110228
- JP-A- 8 219 594
- JP-A- 2001 141 341
- JP-A- 2005 214 542
- JP-A- 2005 214 542
- JP-A- 2005 249 336
- JP-A- 2006 118 778
- JP-A- 2009 257 655
- JP-A- 2010 002 074
- JP-A- 2010 060 262

## Description

### [Technical Field]

The present invention relates to a refrigerator which uses hydrofluoroolefin as a refrigerant and into which refrigeration oil is charged.

### [Background Technique]

Conventionally, fluorocarbon (HFC) containing fluorine and hydrogen is used as a refrigerant in a refrigerator used as an indoor or vehicular air conditioner. Further, refrigeration oil having polarity such as polyalkylene glycol (PAG), polyolester (POE) and polyvinyl ether (PVE) is used for the refrigerator from a standpoint of compatibility with HFC.

In the refrigerator, if a slide member of a compressor thereof is roughly worn, a solid foreign matter is generated due to abrasion powder in some cases.

When a connection pipe is cut when the refrigerator is installed, a metal foreign matter such as copper powder is generated in some cases.

When an existing secondhand pipe is used, mineral oil which is used in the existing pipe and mineral oil-derived material (i.e., insoluble matter in HFC refrigerant) such as oxidized deteriorated reactant remain in the pipe.

If the refrigerator is operated in a state where residual impurities such as the metal foreign matter and the mineral oil-derived material exist, the refrigeration oil is deteriorated or the slide member of the compressor is worn due to the residual impurities.

Hence, there is proposed a refrigerator in which a strainer is disposed in a refrigerant circulation path (see patent document 1 for example).

In the patent document 1, a punching metal or a metal mesh is provided in the strainer, and it is an object of the patent document 1 to trap a solid foreign matter having a particle diameter of 20 µm or greater by the strainer. Another known filter arrangement for a refrigeration cycle is disclosed in JP2005-214542.

### [Prior Art Document]

### [Patent Document]

[Patent Document 1] Japanese Patent Publication No.4370478

### [Summary of the Invention]

### [Problem to be Solved by the Invention]

Reactivity of hydrofluoroolefin is high because it has double bond in its molecule. Hence, there is a possibility that hydrofluoroolefin reacts with radical generated from a high temperature portion such as a slide portion of a compressor. The hydrofluoroolefin which reacts with the radical is decomposed and discharges hydrogen fluoride. A plurality of hydrofluoroolefin molecules are polymerized and oligomerized, and become high viscous liquid, and if the polymerization further proceeds, a solid is formed. The oligomerized high viscous liquid and organic solid polymerized material having low molecular-weight pass through the strainer disclosed in the patent document 1. Therefore, there is a problem that high viscous liquid and solid polymerized material reach the compressor and the slide member is worn, and reliability of the refrigerator is deteriorated.

Therefore, it is an object of the present invention to provide a refrigerator capable of suppressing deterioration of a part used in a refrigerant circulation path by efficiently trapping hydrogen fluoride, oligomer and organic solid polymerized material which are reaction products produced when hydrofluoroolefin is polymerized, and capable of stably operating over long periods.

### [Means for Solving the Problem]

To achieve the above object, the present invention provides a refrigerator according to claim 1.

### [Effect of the Invention]

According to the above-described configuration, since the fibrous filter is provided in the refrigerant circulation path of the refrigerator, hydrogen fluoride generated by oxidation reaction of hydrofluoroolefin-based refrigerant reacts with the fibrous filter, and organic solid polymerized material is prone to adhere to a fiber surface of the fibrous filter on which a newly-formed surface appears due to hydrogen fluoride which is strong acid. Therefore, it is possible to suppress the deterioration of a part used in the refrigerator (i.e., in the refrigerant circulation path). According to this, it is possible to provide a refrigerator capable of stably operating over long periods.

### [Brief Description of the Drawings]

Fig. 1 is a diagram showing a refrigerant circulation path of a refrigerator according to an example not being part of the invention;
Fig. 2 is a sectional view of a strainer according to the present disclosure;
Fig. 3 is a diagram showing a refrigerant circulation path of a refrigerator according to an embodiment of the invention; and
Fig. 4 is a diagram of characteristics showing global warming potential based on mixture ratio of refrigerant in which two ingredients are mixed.

### [Mode for Carrying out the Invention]

According to a first disclosed aspect of the present disclosure, there is provided a refrigerator including a refrigerant circulation path in which a refrigerant discharged from a compressor is sucked into the compressor through a condenser, an expansion mechanism and an evaporator, characterized in that in the refrigerant circulation path, a refrigerant in which hydrofluorocarbon having no double bond is mixed is charged into a single hydrofluoroolefin refrigerant having a carbon-carbon double bond or a refrigerant having the hydrofluoroolefin as a base ingredient, and the refrigerant circulation path is provided therein with a fibrous filter which traps refrigerant reactant. According to this, strong acid hydrogen fluoride generated by oxidation decomposition of hydrofluoroolefin reacts with a surface of the fibrous filter and a newly-formed surface comes about. Further, since oligomer produced from hydrofluoroolefin and organic solid polymerized material adhere the newly-formed surface of the fibrous filter having a large surface area, it is possible to trap, by the fibrous filter surface, hydrogen fluoride, oligomer and the organic solid polymerized material which are refrigerant reactants of the refrigerant. Therefore, parts which constitute the refrigerant circulation path and which are used are not deteriorated by the oligomer and the organic solid polymerized material.

According to an aspect of the invention, the fibrous filter of the first aspect is disposed at through inlet and/or an outlet of the expansion mechanism. Since the refrigerant circulates in a liquid state at the inlet and the outlet of the expansion mechanism, the fibrous filter can most efficiently trap the reaction product of the refrigerant.

According to another aspect of the invention, the refrigerant circulation path includes a bypass circuit for bypassing the fibrous filter. According to this configuration, even if the fibrous filter is clogged with the reaction product of the refrigerant, the refrigerant can flow while bypassing the fibrous filter, flow velocity of the refrigerant in the refrigerant circulation path is not lowered, and it is possible to prevent power consumption of the refrigerator from increasing.

According to another aspect of the invention, the fibrous filter of the first aspect includes glass wool. According to this configuration, hydrogen fluoride generated by decomposition of the refrigerant is prone to react with SiO₂ on a surface of the glass wool, and a newly-formed surface of the glass wool is prone to come about. Hence, oligomer produced by reaction of the refrigerant and the organic solid polymerized material easily adhere to the glass wool.

According to another aspect of the invention, the hydrofluoroolefin of the first aspect contains tetrafluoropropene as a base ingredient, difluoromethane and/or pentafluoroethane is used as the hydrofluorocarbon, and the following two or three ingredients are mixed, i.e., the difluoromethane and/or the pentafluoroethane is mixed into the hydrofluoroolefin such that global warming potential becomes 5 or higher and 750 or lower, preferably 300 or lower. According to this configuration, even if non-collected refrigerant is discharged out into atmosphere, an influence on global warming can be minimized.

Embodiments of the present invention and an example not being part of the invention will be described with reference to the drawings below.

### (Example, not being part of the invention)

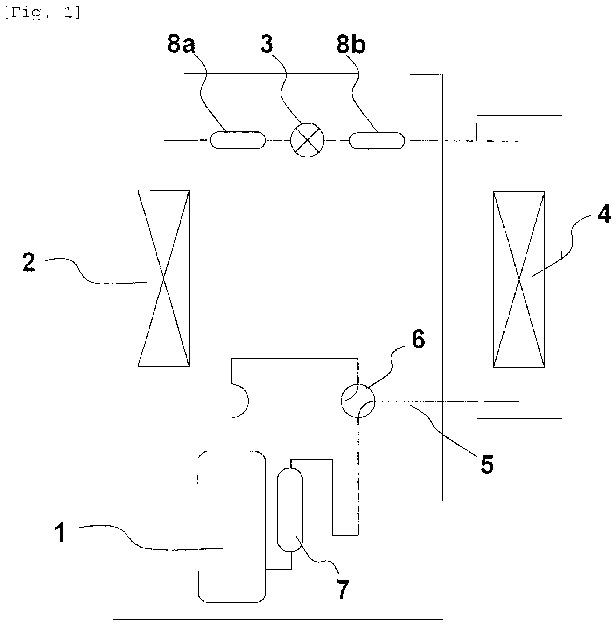

Fig. 1 is a diagram showing a refrigerant circulation path of a refrigerator according to an example, not being part of the invention.

In Fig. 1, as the refrigerant circulation path, the refrigerator includes a compressor 1 which compresses a refrigerant, an outdoor heat exchanger 2 (condenser or evaporator) which condenses or evaporates a refrigerant, an expansion mechanism 3 such as an expansion valve which expands a refrigerant, and an indoor heat exchanger 4 (evaporator or condenser) which condenses or evaporates a refrigerant. The refrigerant circulation path includes pipes 5 through which the compressor 1, the outdoor heat exchanger 2, the expansion mechanism 3 and the indoor heat exchanger 4 are connected to one another. The refrigerant circulation path further includes a four-way valve 6 and an accumulator 7. A refrigerant and refrigeration oil are used as working media. Refrigeration oil is usually charged into the compressor 1, and when the refrigerator is operated, a small portion of the refrigeration oil is circulated in the refrigerant circulation path together with a refrigerant.

In the refrigerant circulation path shown in Fig. 1, strainers 8a and 8b are provided in front of and in the rear of the expansion mechanism 3. The strainers 8a and 8b are provided therein with fibrous filters.

Preferable specific examples of the strainers 8a and 8b will be described.

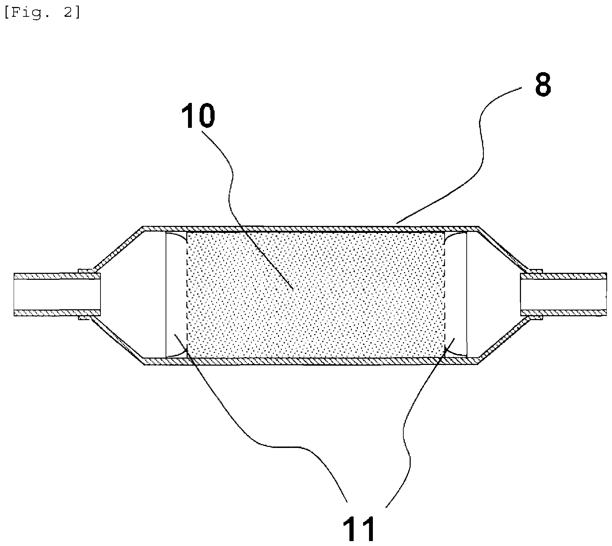

Fig. 2 is a schematic sectional view of one of the strainers 8a and 8b shown in Fig. 1. Punching metals 11 are disposed in the strainer 8 to sandwich a fibrous filter 10 from both sides. Meshes made of SUS may be used instead of the punching metals 11. If the punching metals 11 are disposed, it is possible to prevent the fibrous filter 10 from being crushed and pulverized by vibration. A hole diameter of the punching metal 11 is not especially limited, but several millimeters are sufficient.

For the purpose of removing a small amount of moisture in the refrigerant circulation path, a molecular sieve may be disposed adjacent to the fibrous filter 10. A size of the fibrous filter 10 is not limited, but if its length is too short, a contact area with respect to a refrigerant becomes small, and a trapping ability of refrigerant decomposing material is deteriorated. It is possible to add a known part such as a solenoid valve on the side of an indoor device used for a reheating and dehumidifying operation if need arises.

As the fibrous filter 10, it is also possible to use: resins such as polypropylene; polyethylene; polyethylene terephthalate; and nylon; and metal wool such as SUS and copper ,and glass fiber. The glass fiber is suitable as the fibrous filter 10 because it does not cause adverse influence in the refrigerant circulation path, and it has high trapping ability of reaction produce of a refrigerant. Among the glass fiber, a so-called glass wool formed by bringing short fibers together into a wool shape is most suitable because it has high trapping ability of refrigerant-reacting material.

Although the glass wool is obtained by forming glass fiber into cotton shape, material of a surface thereof is SiO₂. Hydrogen fluoride generated by decomposition of a refrigerant is prone to react with SiO₂ of the surface of the glass fiber, and a newly-formed surface of the glass fiber surface is prone to come about. Hence, oligomer produced by reaction of a refrigerant is prone to adhere to the glass fiber surface.

In Fig. 1, refrigeration oil which is charged into the compressor 1 has compatibility with respect to a refrigerant. Ester-based refrigeration oil according to the embodiment is synthesized by dehydration reaction with polyhydric alcohol and saturated or unsaturated fatty acid. Neopentyl glycol, pentaerythritol, dipentaerythritol or the like is used as the polyhydric alcohol in accordance with viscosity of the refrigeration oil. Further, straight-chain fatty acid such as hexanoic acid, heptanoic acid, nonanoic acid and decanoic acid; and branched-chain fatty acid such as 2-methylhexanoic acid, 2-ethylhexanoic acid, and 3, 5, 5-trimethylhexanoic acid are used as the saturated fatty acid. Although ester oil containing the straight-chain fatty acid is excellent in sliding characteristics, it is inferior in hydrolyzability. Although ester oil containing branched-chain fatty acid is slightly inferior in sliding characteristics, it is less prone to be hydrolyzed.

Further, if need arises, various kinds of addition agents containing: extreme pressure agent such as triphenyl phosphate and tricresyl phosphate; acid-acceptor such as epoxy-bearing compound; and antifoaming agent are selectively added to the refrigeration oil of the embodiment.

In the refrigerant circulation path in which the fibrous filter is included, at the time of a cooling operation, high temperature and high pressure refrigerant gas discharged from the compressor 1 passes through the four-way valve 6 and the outdoor heat exchanger 2, and is condensed and liquefied. The liquefied refrigerant passes through the strainer 8a and then passes through the expansion mechanism 3, and a pressure of the refrigerant is reduced, and the refrigerant further passes through the strainer 8b and enters the indoor heat exchanger 4. The low temperature and low pressure liquid refrigerant is evaporated, heat-exchanges with indoor air, it becomes low temperature and low pressure gas refrigerant, the gas refrigerant passes through the accumulator 7 and returns to the compressor 1.

At the time of a heating operation, since the flow path is reversed by the four-way valve 6, the refrigerant which comes out from the compressor 1 passes through the four-way valve 6, heat-exchanges with indoor air in the indoor heat exchanger 4, and the refrigerant is condensed and liquefied. The liquefied refrigerant passes through the strainer 8b and then, passes through the expansion mechanism 3 and a pressure thereof is reduced, the refrigerant passes through the strainer 8a, the refrigerant is evaporated in the outdoor heat exchanger 2, becomes low temperature and low pressure gas, and the gas passes through the accumulator 7 and returns to the compressor 1.

In the refrigerator, a motor and a discharging portion in the compressor 1 are heated to high temperatures, and the slide member is also heated to a higher temperature. In such high temperature portions, hydrofluoroolefin refrigerant is decomposed by oxidation, and generates hydrogen fluoride. The hydrofluoroolefin refrigerant causes polymerization reaction at the same time, and produces oligomer and organic solid polymerized material.

The hydrogen fluoride generated here is strong acid, the hydrogen fluoride reacts with a surface of the fibrous filter 10 in the refrigerant circulation path, and a newly-formed surface comes about. Oligomer produced from hydrofluoroolefin adheres to the newly-formed surface of the fibrous filter 10 having a large surface area. Hence, by trapping, by the surface of the fibrous filter 10, hydrogen fluoride, oligomer, organic solid polymerized material which are reaction products of the refrigerant, it is possible to suppress the deterioration of parts used in the refrigerant circulation path.

The fibrous filters 10 are disposed at an inlet and an outlet of the expansion mechanism 3. If the fibrous filters 10 are disposed at locations where liquid refrigerant circulates, it is possible to most efficiently trap the reaction product of the refrigerant. Since the liquid refrigerant circulates at the time of one of the cooling operation and the heating operation, the fibrous filter 10 may be disposed at one of the inlet and outlet of the expansion mechanism 3. (Embodiments)

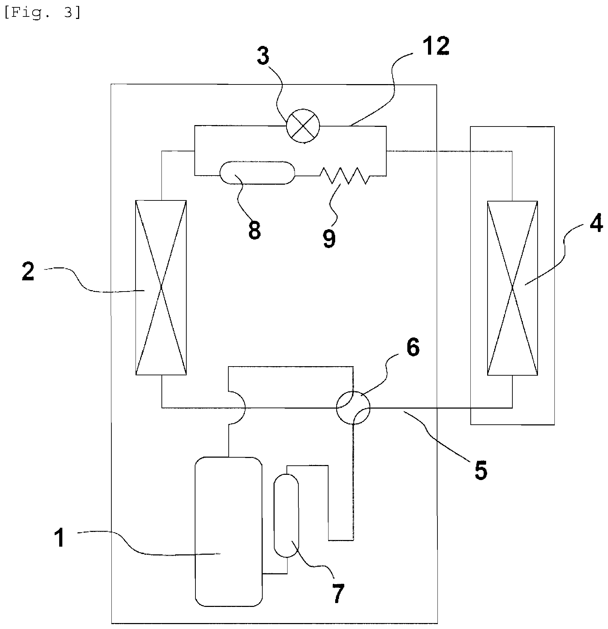

Fig. 3 is a diagram showing a refrigerant circulation path of a refrigerator according to an embodiment of the invention.

The same constituent members as those of the example described above for figures 1 and 2 are designated with the same numbers, and description thereof will be omitted.

In this embodiment, a strainer 8 is provided with a capillary tube 9 in series, and the strainer 8 and the capillary tube 9 are provided with a bypass circuit 12 in parallel. The bypass circuit 12 is provided with an expansion mechanism 3. The strainer 8 includes a fibrous filter.

The capillary tube 9 adjusts an amount of refrigerant passing through the strainer 8, and keeps a balance between the amount of the refrigerant and an amount of a refrigerant passing through the expansion mechanism 3, thereby keeping an influence on a refrigerant circulation path to the minimum.

By providing the bypass circuit 12 which bypasses the strainer 8 including the fibrous filter, the following merits are exerted. By trapping refrigerant reactant by the strainer 8, even if a flow rate of a refrigerant passing through the strainer 8 is reduced, the refrigerant passes through the bypass circuit 12. Therefore, performance of the refrigerator is not lowered due to clogging of the strainer 8. Hence, it is possible to prevent power consumption of the refrigerator from increasing, and to efficiently trap refrigerant reactant circulating through the refrigerant path. By providing such a bypass circuit 12, it is possible to combine the strainers 8a and 8b including the fibrous filters respectively provided in front of and in the rear of the expansion mechanism 3 into one, and a cost of the strainer 8 including the fibrous filter can be reduced.

In this embodiment, a bypass circuit which bypasses the strainers 8a and 8b may be provided.

In the embodiment, a refrigerant charged into the refrigerator is a single hydrofluoroolefin refrigerant into which hydrofluorocarbon is mixed. Alternatively, the refrigerant charged into the refrigerator may be a refrigerant containing hydrofluoroolefin as a base ingredient into which hydrofluorocarbon is mixed.

The hydrofluoroolefin contains tetrafluoropropene (HFO1234yf) as a base ingredient for example.

Difluoromethane(HFC32) and/or pentafluoroethane (HFC125) is used as hydrofluorocarbon.

Hydrofluorocarbon is mixed into a single hydrofluoroolefin refrigerant (GWP=4) or a refrigerant containing hydrofluoroolefin as a base ingredient such that global warming potential (GWP) becomes 5 or higher and 750 or lower, preferably 5 or higher and 300 or lower.

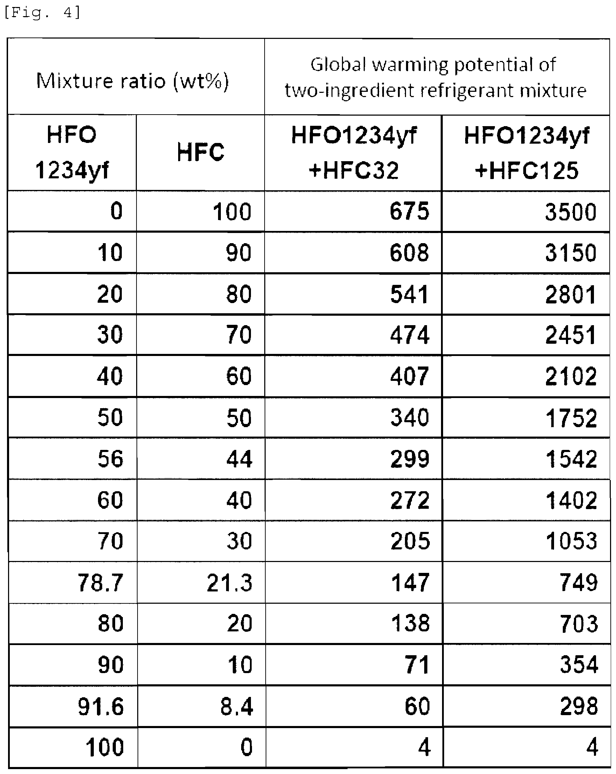

Fig. 4 is a diagram of characteristics showing global warming potential based on mixture ratio of refrigerant of two ingredients in which difluoromethane or pentafluoroethane is mixed into tetrafluoropropene. More specifically, in the case of mixture of two ingredients, as shown in Fig. 4, to mix tetrafluoropropene and difluoromethane with each other such that GWP becomes 300 or less, 44wt% or less difluoromethane by weight should be mixed. To mix tetrafluoropropene and difluoromethane with each other such that GWP becomes 750 or less, 21.3 wt% or less difluoromethane by weight should be mixed. To mix tetrafluoropropene and difluoromethane with each other such that GWP becomes 300 or less, 8.4 wt% or less difluoromethane by weight should be mixed.

When a refrigerant is a single tetrafluoropropene refrigerant, GWP becomes 4 and the refrigerant shows an extremely excellent value. However, if this refrigerant is compared with a refrigerant in which hydrofluorocarbon is mixed, since the former refrigerant has greater specific volume, freezing ability is deteriorated and thus, a larger refrigeration cycle apparatus is necessary. In other words, if hydrofluoroolefin having a carbon-carbon double bond is set as a basic ingredient and if a refrigerant in which hydrofluorocarbon having no double bond is mixed into the basic ingredient is used, it is possible to improve predetermined characteristics such as freezing ability, and the refrigerant can easily be used as compared with a single hydrofluoroolefin refrigerant. Therefore, a rate of the tetrafluoropropene containing the single refrigerant in a refrigerant to be charged may appropriately be selected in accordance with a purpose of a refrigeration cycle apparatus in which a compressor is incorporated and conditions such as limitation of the GWP.

According to this, even if non-collected refrigerant is discharged out into atmosphere, an influence on global warming can be minimized. Although the mixture refrigerant which is mixed at the above-described rate is zeotropic refrigerant mixture, a temperature difference can be made small and behavior thereof comes close to that of pseudo azeotropic refrigerant mixture and thus, it is possible to improve the cooling ability and coefficient of performance (COP) of the refrigerator.

Although the refrigerator has been described based on the cooling and heating air conditioner, the effect is the same if the refrigerator is not an open type refrigerator, and the technique of the invention can be applied to a refrigerator-freezer, a freezer, a dehumidifier, a heat pump type washer dryer, a heat pump type water heater, a beverage automatic dispenser and the like of course.

### [Industrial Applicability]

The refrigerator of the present invention can be applied to a water heater, a refrigerator-freezer, a freezer, a dehumidifier, a heat pump type washer dryer, a heat pump type water heater, a beverage automatic dispenser and the like in addition to the indoor or the vehicular air conditioner.

### [Explanation of Symbols]

- 1: compressor
- 2: outdoor heat exchanger
- 3: expansion mechanism
- 4: indoor heat exchanger
- 5: pipe
- 6: four-way valve
- 7: accumulator
- 8, 8a, 8b: strainer
- 9: capillary tube
- 10: fibrous filter
- 11: punching metal
- 12: bypass circuit

## Claims

1. A refrigerator including a refrigerant circulation path in which a refrigerant discharged from a compressor (1) is sucked into the compressor (1) through an outdoor heat exchanger (2), which can be a condenser or an evaporator, an expansion mechanism (3) and an indoor heat exchanger (4), which can be an evaporator or a condenser, **characterized in that**
in the refrigerant circulation path,
a refrigerant in which hydrofluorocarbon having no double bond is mixed and is charged into a single hydrofluoroolefin refrigerant having a carbon-carbon double bond or a refrigerant having the hydrofluoroolefin as a base ingredient, the refrigerant circulation path is provided therein with a fibrous filter (10) which traps refrigerant reactant, wherein
the fibrous filter (10) is made of glass wool glass fibers, wherein the material of the surface of the glass wool is SiO2, and the wherein the glass wool fibers have a cotton shape, and wherein
the refrigerant circulation path includes a bypass circuit (12) for bypassing the fibrous filter (10), and wherein
the expansion mechanism (3) is disposed at the bypass circuit (12).

2. The refrigerator according to claim 1, **characterized in that**
the fibrous filter (10) is disposed at an inlet and/or an outlet of the expansion mechanism (3).

3. The refrigerator according to claim 1, **characterized in that**
the hydrofluoroolefin contains tetrafluoropropene as a base ingredient,
difluoromethane and/or pentafluoroethane is used as the hydrofluorocarbon, and
the difluoromethane and/or the pentafluoroethane is mixed into the hydrofluoroolefin such that global warming potential becomes 5 or higher and 750 or lower, preferably 300 or lower.

## Patentansprüche

1. Kühlschrank, welcher einen Kältemittelumwälzpfad einschließt, bei dem ein Kältemittel, das von einem Kompressor (1) ausgestoßen wird, durch einen Außen-Wärmetauscher (2), bei dem es sich um einen Kondensator oder einen Verdampfer handeln kann, einen Expansionsmechanismus (3) und einen Innen-Wärmetauscher (4), bei dem es sich um einen Verdampfer oder einen Kondensator handeln kann, hindurch wieder in den Kompressor (1) hinein angesaut wird, **dadurch gekennzeichnet, dass**
in dem Kältemittelumwälzpfad
ein Kältemittel, bei dem Fluorkohlenwasserstoff, der keine Doppelbindung aufweist, in ein einzelnes Hydrofluorolefin-Kältemittel, welches eine Kohlenstoff-Kohlenstoff-Doppelbindung aufweist, oder in ein Kältemittel, welches das Hydrofluorolefin als Grundbestandteil aufweist, eingemischt und eingetragen wird und der Kältemittelumwälzpfad darin mit einem Faserfilter (10) ausgestattet ist, der Kältemittel-Reaktionspartner auffängt, wobei
der Faserfilter (10) aus Glaswolle-Glasfasern besteht, wobei das Material der Oberfläche der Glaswolle SiO₂ ist und wobei die Glaswollfasern eine Baumwollform aufweisen, und wobei
der Kältemittelumwälzpfad einen Umgehungskreislauf (12) zum Umgehen des Faserfilters (10) aufweist und wobei
der Expansionsmechanismus (3) an dem Umgehungskreislauf (12) angeordnet ist.

2. Kühlschrank nach Anspruch 1, **dadurch gekennzeichnet, dass**
der Faserfilter (10) an einem Einlass und/oder einem Auslass des Expansionsmechanismus (3) angeordnet ist.

3. Kühlschrank nach Anspruch 1, **dadurch gekennzeichnet, dass**
das Hydrofluorolefin als Grundbestandteil Tetrafluorpropen umfasst,
Difluormethan und/oder Pentafluorethan als Fluorkohlenwasserstoff verwendet werden/wird, und
das Difluormethan und/oder das Pentafluorethan derart in das Hydrofluorolefin eingemischt werden/wird, dass das globale Erwärmungspotenzial bei 5 oder höher und bei 750 oder darunter, bevorzugt bei 300 oder darunter, liegt.

## Revendications

1. Réfrigérateur qui renferme un trajet de circulation d'agent réfrigérant lors duquel un agent réfrigérant qui est refoulé par un compresseur (1) est transporté par aspiration à travers un échangeur thermique extérieur (2), qui peut être un condenseur ou un évaporateur, à travers un mécanisme détendeur (3) et un échangeur thermique intérieur (4), qui peut être un évaporateur ou un condenseur, pour revenir dans ledit compresseur (1), **caractérisé en ce que**
dans le trajet de circulation d'agent réfrigérant,
un agent réfrigérant dans lequel de l'hydrocarbure fluoré qui ne présente pas de liaison double est ajouté et mélangé à un seul agent réfrigérant hydrofluoroléfine qui présente une liaison double carbone-carbone ou à un agent réfrigérant qui présente l'hydrofluoroléfine comme constituant de base, et **en ce que** le trajet de circulation d'agent réfrigérant est équipé d'un filtre en fibres (10) qui est disposé dans ce dernier et qui recueille des partenaires réactionnels de l'agent réfrigérant,
le filtre en fibres (10) étant constitué de fibres de verre en laine de verre, le matériau constituant la surface de la laine de verre étant du SiO₂ et les fibres en laine de verre présentant une forme correspondant à celles du coton, et
le trajet de circulation d'agent réfrigérant présentant un circuit de dérivation (12) destiné à contourner le filtre en fibres (10), et
le mécanisme détendeur (3) étant disposé au niveau du circuit de dérivation (12).

2. Réfrigérateur selon la revendication 1, **caractérisé en ce que**
le filtre en fibres (10) est disposé à une entrée et/ou à une sortie du mécanisme détendeur (3).

3. Réfrigérateur selon la revendication 1, **caractérisé en ce que**
l'hydrofluoroléfine comprend du tétrafluoropropène comme constituant de base,
du difluorométhane et/ou du pentafluoroéthane sont/est utilisé(s) en tant qu'hydrocarbures fluorés, et
le difluorométhane et/ou le pentafluoroéthane sont/est mélangé(s) à l'hydrofluoroléfine de telle sorte que le potentiel de réchauffement global est de 5 ou plus et de 750 ou moins, de préférence de 300 ou moins.
